# EUROPEAN PATENT APPLICATION

(11) **EP 4 464 205 A1**
(43) Date of publication of application: **20.11.2024**
(21) Application number: 22919981.5
(22) Date of filing: 09.12.2022
(51) Int. Cl.: A47J 27/00, A47J 36/00

(54) **COOKING APPARATUS**

(30) Priority: 17.01.2022 CN 202220121260 U
(71) Applicant: Shenzhen Botinkit Co., Ltd., Shenzhen, Guangdong 518000 (CN)
(72) Inventor: LIU, Fuzhuang, Shenzhen, Guangdong 518000 (CN); FU, Qiang, Shenzhen, Guangdong 518000 (CN); GUAN, Chenyu, Shenzhen, Guangdong 518000 (CN)
(74) Representative: Cleanthous, Marinos
(86) International application number: PCT/CN2022/137752
(87) International publication number: WO 2023/134348

(57) **Abstract**

The present disclosure discloses a cooking device, including a machine base, a rotating structure and a pot assembly, wherein the pot assembly is rotatably connected to the machine base through the rotating structure, a first limiting member is provided on the machine base, and a stopper is provided on the rotating structure, and when the rotating structure rotates, the stopper rotates and contacts the first limiting member and stops, so that the pot assembly is in a first limited state. The present disclosure implements the limiting of the pot assembly through the cooperation of the first limiting member and the stopper, so that the pot assembly can be stable in a certain state, has a simple structure and low cost, and is not easy to fail.

## Description

### TECHNICAL FIELD

The embodiments of the present disclosure relate to the technical field of cooking utensils, and more particularly to a cooking device.

### BACKGROUND

As the pace of life accelerates, more and more people need a convenient and fast cooking device that can automatically cook, which can free their hands. A cooking machine is controlled by a microcomputer, and can automatically cook without human supervision, achieving multiple uses of a single pot, which saves time and effort, and is smoke-free. Therefore, it is favored by more and more users. A cooking robot can have two states, which are cooking and outputting food. When in use, it is often necessary to switch between these two states. At present, a switch limiting structure of cooking and outputting dishes is relatively complex and requires the cooperation of multiple structures.

### SUMMARY

The embodiments of the present disclosure provide a cooking device to solve the technical problems of the limiting structure of the prior art being complex and easy to fail.

To achieve this purpose, the present disclosure adopts the following technical solutions:

A cooking device, characterized in that the cooking device comprises a machine base, a rotating structure, and a pot body assembly, wherein the pot body assembly is rotatably connected to the machine base through the rotating structure, a first limiting member is provided on the machine base, and a stopper is provided on the rotating structure, wherein when the rotating structure rotates, the stopper rotates and contacts the first limiting member and stops, causing the pot body assembly to be in a first limited state.

In one embodiment, a first buffer is provided on the first limiting member, wherein when the stopper rotates to the first limited state, the stopper contacts the first buffer and is stopped by the first limiting member.

In one embodiment, a second limiting member is also provided on the machine base, wherein when the rotating structure rotates, the stopper rotates and contacts the second limiting member, causing the pot body assembly to be in a second limited state.

In one embodiment, a second buffer is provided on the second limiting member, wherein when the stopper rotates to the second limited state, the stopper contacts the second buffer and is stopped by the second limiting member.

In one embodiment, the first buffer and/or the second buffer is a shock-absorbing sleeve, wherein the shock-absorbing sleeve is sleeved on the first buffer and/or the second buffer.

In one embodiment, the rotating structure comprises a rotating shaft, wherein the pot body assembly is connected to the machine base through the rotating shaft, and the stopper is connected to the rotating shaft.

In one embodiment, the first limiting member and the second limiting member are arranged spaced apart and distributed along the rotation direction of the rotating shaft.

In one embodiment, the stopper is fixedly connected to the rotating structure, wherein the free end of the stopper is at least arranged corresponding to the first limiting member and/or the second limiting member.

In one embodiment, the machine base includes a machine base body and a pair of support seats, wherein the pair of support seats are respectively fixed to two sides of the machine base body, each of the pair of support seats defines a through hole, two ends of the rotating shaft pass through the through holes, respectively, and the first limiting member and the second limiting member are both provided on the support seat.

In one embodiment, the rotating shaft is also provided with a fixing hole, wherein a temperature measuring device for detecting the temperature of the pot body in the pot body assembly is provided in the fixing hole.

The advantageous effects of the present disclosure are as follows:

The cooking device of the present disclosure is provided with the first limiting member on the machine base, and the stopper is provided on the rotating structure. When the rotating structure rotates, that is, when the cooking device needs to switch states to cook or output the food, the rotating structure will drive the stopper to rotate synchronously. When the stopper rotates to the first limiting member, the first limiting member will limit the rotation of the stopper, thereby limiting the rotation of the rotating structure to stop rotating, causing the pot body assembly to be in the first limited state. The present disclosure realizes the limiting of the pot body assembly through the cooperation between the first limiting member and the stopper, so that the pot body assembly can be stable in any state. The structure is simple, with a low cost, and is not easy to fail.

### BRIEF DESCRIPTION OF DRAWINGS

In order to more clearly illustrate the technical solutions in the embodiments of the present disclosure or the prior art, the drawings required for describing the embodiments or the prior art are briefly introduced below. Of course, the drawings described below are some embodiments of the present disclosure. For ordinary persons skilled in the art, other drawings can also be obtained based on these drawings without creative work.
FIG. 1 is a schematic diagram of a partial structure of a cooking device according to an embodiment of the present disclosure;
FIG. 2 is a side view of FIG. 1.

### LISTING OF ELEMENTS

| | |
|---|---|
| 110 | First limiting member |
| 112 | First buffer |
| 120 | Second limiting member |
| 122 | Second buffer |
| 200 | Connecting flange |
| 210 | Stopper |
| 212 | Rotating shaft |
| 214 | Support seat |
| 215 | Snap ring |
| 216 | Temperature measuring device |

### DETAILED DESCRIPTION OF EMBODIMENTS

In order to clarify the purpose, technical solution, and advantages of the present disclosure, the technical solution of the present disclosure will be described in detail with reference to the drawings in the embodiments of the present disclosure. Of course, the described embodiments are part of the embodiments of the present disclosure, and not all of the embodiments. In the absence of conflict, the embodiments in the present disclosure and the features in the embodiments can be combined with each other. Based on the embodiments in the present disclosure, all other embodiments obtained by ordinary persons skilled in the art without creative work are within the scope of protection of the present disclosure.

It should be noted that: in the drawings, the same or similar numbers throughout represent the same or similar elements or elements with the same or similar functions; in the description of the present disclosure, the terms "center", "vertical", "horizontal", "front", "back", "left", "right", "upright", "laying down", "top", "bottom", "inside", "outside" and the like indicate the orientation or position relationship based on the orientation or position relationship shown in the drawings, which is only for the convenience of describing the present disclosure and simplifying the description, rather than indicating or implying that the device or element referred to must have a specific orientation, or be constructed and operated in a specific orientation, and therefore cannot be understood as limiting the scope of protection of the present disclosure; in the description of the present disclosure, "first", "second", etc. are only used to distinguish each other, rather than to indicate their importance and order, etc.

In the description of the present disclosure, unless otherwise clearly specified and limited, the terms "installed", "coupled", and "connected" should be understood in a broad sense, for example, it can be a fixed connection, a movable connection, or a detachable connection; it can be a mechanical connection or an electrical connection; it can be directly connected or indirectly connected through an intermediate medium, or it can be the internal connection of two components, etc. For ordinary persons skilled in the art, the specific meanings of the above terms in the present disclosure can be understood in specific circumstances.

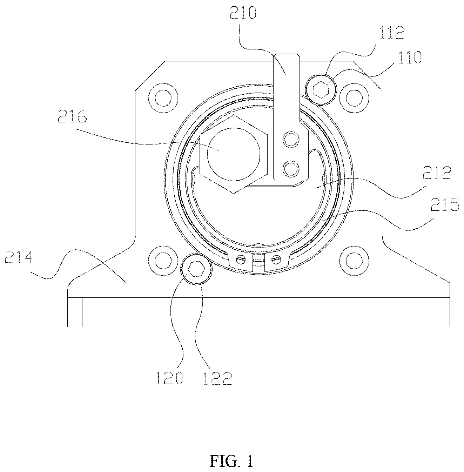

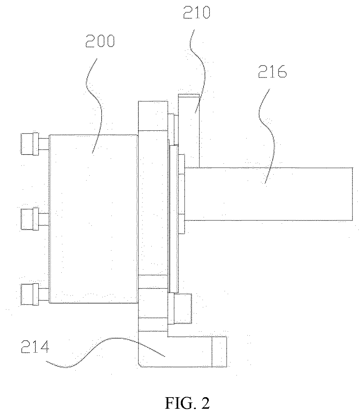

As shown in FIGS. 1 and 2, the cooking device of the present disclosure includes a machine base, a rotating structure, and a pot body assembly. The pot body assembly is rotatably connected to the machine base through the rotating structure. The machine base is provided with a first limiting member 110, and the rotating structure is provided with a stopper 210. When the rotating structure rotates, the stopper 210 rotates and contacts the first limiting member 110 and stops, so that the pot body assembly is in a first limited state. Among them, as shown in FIG. 2, the drawings of the present embodiment do not show the pot body assembly, and a connecting flange 200 is connected to the pot body assembly.

The first limiting member 110 is provided on the base, and the stopper 210 is provided on the rotating structure. When the rotating structure rotates, that is, when the cooking device needs to switch states to cook or output food, the rotating structure will drive the stopper 210 to rotate synchronously. When the stopper 210 rotates to the first limiting member 110, the first limiting member 110 will limit the rotation of the stopper 210, thereby limiting the rotation of the rotating structure to stop rotating, so that the pot body assembly is in the first limited state.

A first buffer 112 is provided on the first limiting member 110. When the stopper 210 rotates to the first limited state, the stopper 210 contacts the first buffer 112 and is stopped by the first limiting member 110. The first limiting member 110 can be an elastic buffer attached to the first limiting member 110 to reduce the impact damage caused by the over-limitation of the pot body assembly. The position where the first buffer 112 is attached is the side of the first limiting member 110 adjacent to the stopper 210, and the height of the attachment is preferably such that the stopper 210 can contact it. Therefore, when the stopper 210 rotates to the first limiting member 110, the stopper 210 can contact the first buffer 112 and be stopped by the first limiting member 110. The material of the first buffer 112 is monomer elastic polyurethane.

As shown in FIG. 1, in the present embodiment, it is preferred that the first limiting member 110 is a convex columnar structure. The first buffer 112 can be set as a buffer sleeve, which is sleeved on the first limiting member 110. The stopper 210 can be set as an elongated structure, and its length is preferably such that it can contact the first limiting member 110 after rotation.

As shown in FIG. 1, a second limiting member 120 is also provided on the machine base. When the rotating structure rotates, the stopper 210 rotates and contacts the second limiting member 120, so that the pot body assembly is in a second limited state.

The second limiting member 120 is provided on the machine base 10, and the stopper 210 is provided on the rotating structure. When the rotating structure rotates, that is, when the cooking device needs to switch states to cook or output food, the rotating structure will drive the stopper 210 to rotate synchronously. When the stopper 210 rotates to the second limiting member 120, the second limiting member 120 will limit the rotation of the stopper 210, thereby limiting the rotation of the rotating structure to stop rotating, so that the pot body assembly is in the second limited state.

A second buffer 122 is provided on the second limiting member 120. When the stopper 210 rotates to the first limited state, the stopper 210 contacts the second buffer 122 and is stopped by the second limiting member 120. The second buffer 122 can be an elastic buffer attached to the second limiting member 120 to reduce the impact damage caused by the over-limitation of the pot body assembly. The position where the second buffer 122 is attached is the side of the second limiting member 120 adjacent to the stopper 210, and the height of the attachment is preferably such that the stopper 210 can contact it. Therefore, when the stopper 210 rotates to the second limiting member 120, the stopper 210 can contact the second buffer 122 and be stopped by the first limiting member 110. The material of the second buffer 122 is monomer elastic polyurethane.

As shown in FIG. 1, in the present embodiment, it is preferred that the second limiting member 120 is a convex columnar structure. The second buffer 122 can be set as a buffer sleeve, which is sleeved on the second limiting member 120. The stopper 210 can be set as an elongated structure, and its length is preferably such that it can contact the second limiting member 120 after rotation.

As shown in FIG. 1, the rotating structure includes a rotating shaft 212, and the pot body assembly is connected to a bearing seat 214 through the rotating shaft 212. The machine base includes a machine base body and a pair of support seats 214. The pair of support seats are respectively fixed to two sides of the machine base body. Each of the pair of support seats 214 defines a through hole, and two ends of the rotating shaft 212 pass through the through holes, respectively. The first stopper 110 and the second stopper 120 are both arranged on the support seats 214 and fixed by a snap ring 215. The stopper 210 is fixedly connected to the rotating shaft 212. The free end of the stopper 210 can be arranged corresponding to the first limiting member 110 and/or the second limiting member 120, or the free end of the stopper 210 exceeds the second limiting member 110 and/or the second limiting member 120, which can realize the stopping function of the stopper 210.

The first limiting member 110 and the second limiting member 120 are arranged spaced apart and distributed along the rotation direction of the rotating shaft 212. The set position of the first stopper 110 can be set according to the angle of use of the pot body assembly, generally between an upright state and a food-output state of the pot body. The rotation angle range of the pot body assembly is 0-120 degrees, and the limiting angle range formed by the first stopper 110 and the second stopper 120 is 0-130 degrees. The limiting angle formed by the first stopper 110 and the second stopper 120 is slightly larger than the rotating angle range of the pot body assembly of the pot body, and can be adjusted according to user needs to set different safety margins. For example, in general, the first stopper 110 limits the position of the pot body assembly in the food-output state, even if the pot body assembly is at 90 degrees; the second stopper 120 limits the position of the pot body in the cooking state, even if the pot body assembly is in a laying down position.

As shown in FIGS. 1 and 2, a fixing hole is defined in the rotating shaft 212, and a temperature measuring device 216 for detecting the temperature of the pot body in the pot body assembly is provided in the fixing hole. The temperature measuring device is a non-contact temperature measuring device, and can preferably be an infrared temperature measuring device. The temperature measuring device 216 is installed on the rotating shaft 212. When the rotating shaft 212 rotates, the temperature measuring device 216 can rotate with the rotation of the rotating shaft 212, and can directly monitor the temperature of the pot body, avoiding inaccurate temperature monitoring of the pot body due to obstruction or due to connecting wires that are easily broken due to entanglement when installed in other positions.

Note that the above descriptions are only preferred embodiments of the present disclosure and the technical principles used. Those skilled in the art will understand that the present disclosure is not limited to the specific embodiments described herein, and that various obvious changes, readjustments, and substitutions can be made by those skilled in the art without departing from the scope of protection of the present disclosure. Therefore, although the present disclosure is described in more detail through the above embodiments, the present disclosure is not limited to the above embodiments, and may include additional equivalent embodiments without departing from the concept of the present disclosure, and the scope of the present disclosure is determined by the scope of the attached claims.

## Claims

1. A cooking device, **characterized in that** the cooking device comprises a machine base, a rotating structure, and a pot body assembly, wherein the pot body assembly is rotatably connected to the machine base through the rotating structure, a first limiting member is provided on the machine base, and a stopper is provided on the rotating structure, wherein when the rotating structure rotates, the stopper rotates and contacts the first limiting member and stops, causing the pot body assembly to be in a first limited state.

2. The cooking device according to claim 1, **characterized in that** a first buffer is provided on the first limiting member, wherein when the stopper rotates to the first limited state, the stopper contacts the first buffer and is stopped by the first limiting member.

3. The cooking device according to claim 2, **characterized in that** a second limiting member is also provided on the machine base, wherein when the rotating structure rotates, the stopper rotates and contacts the second limiting member, causing the pot body assembly to be in a second limited state.

4. The cooking device according to claim 3, **characterized in that** a second buffer is provided on the second limiting member, wherein when the stopper rotates to the second limited state, the stopper contacts the second buffer and is stopped by the second limiting member.

5. The cooking device according to claim 4, **characterized in that** the first buffer and/or the second buffer is a shock-absorbing sleeve, wherein the shock-absorbing sleeve is sleeved on the first buffer and/or the second buffer.

6. The cooking device according to claim 3, **characterized in that** the rotating structure comprises a rotating shaft, wherein the pot body assembly is connected to the machine base through the rotating shaft, and the stopper is connected to the rotating shaft.

7. The cooking device according to claim 6, **characterized in that** the first limiting member and the second limiting member are arranged spaced apart and distributed along the rotation direction of the rotating shaft.

8. The cooking device according to claim 6, **characterized in that** the stopper is fixedly connected to the rotating structure, wherein the free end of the stopper is at least arranged corresponding to the first limiting member and/or the second limiting member.

9. The cooking device according to claim 8, **characterized in that** the machine base includes a machine base body and a pair of support seats, wherein the pair of support seats are respectively fixed to two sides of the machine base body, each of the pair of support seats defines a through hole, two ends of the rotating shaft pass through the through holes, respectively, and the first limiting member and the second limiting member are both provided on the support seat.

10. The cooking device according to claim 8, **characterized in that** the rotating shaft is also provided with a fixing hole, wherein a temperature measuring device for detecting the temperature of the pot body in the pot body assembly is provided in the fixing hole.
